# EUROPEAN PATENT APPLICATION

(11) **EP 4 293 845 A1**
(43) Date of publication of application: **20.12.2023**
(21) Application number: 22382576.1
(22) Date of filing: 15.06.2022
(51) Int. Cl.: H02G 3/32, F16L 3/10, F16L 3/12, H01R 4/48, H01R 4/64, H01R 11/09, H02G 3/04, H02G 3/00

(54) **ATTACHING PIECE FOR ATTACHING A CABLE TO A SUPPORT, AND CORRESPONDING ASSEMBLY**

(71) Applicant: Unex Aparellaje Electrico S.L., 08005 Barcelona (ES)
(72) Inventor: MOSTAZO OVIEDO, José Antonio, 08903 L'Hospitalet de Llobregat (ES)
(74) Representative: Curell Suñol S.L.P.

(57) **Abstract**

The present invention relates to a securing part (1) for securing a cable to a support, comprising a coupling portion (4) for coupling the securing part (1) to the support and a securing portion (5) for securing the cable. The securing portion (5) comprises a housing (6) for the cable, a main passage (8) through which the cable goes through the securing part (1) in a main direction, an opening (7) for introducing the cable into the housing (6), and two arms (9) demarcating a secondary passage (10) going through the housing (6) in a plurality of secondary directions. By rotating the securing part (1), the cable goes through said securing part through the secondary passage (10). In a plane orthogonal to each secondary direction, the secondary passage has a closed perimeter circumscribing a circumference the diameter of which gradually decreases as the angle between the secondary and main directions increases.

## Description

The invention is comprised in the field of devices used for securing a cable to a support.

More specifically, the invention relates to a securing part for securing a cable to a support, of the type comprising a coupling portion for coupling the securing part to the support, and a securing portion for securing the cable to the securing part, said securing portion comprising a housing for housing a straight segment of the cable, said housing defining a main passage in a main direction for the straight segment of the cable housed in the housing to go through the securing part along the main passage, and an opening for introducing the straight segment of the cable, from the outside of the securing part, into the housing and into the main passage by means of a translation of the straight segment of the cable in a direction orthogonal to the main direction.

The invention also relates to an assembly comprising a securing part of the type indicated above, a support to which said securing part is coupled, and a suitable cable so that a straight segment of said cable can be introduced into the housing through the opening.

The invention is preferably, although not exclusively used for securing an electrically conductive cable to a bar or to a cable tray. The cable tray is of the type which is used for guiding electrical cables, fiber-optic cables, or cables of another type through a space.

### State of the Art

EP3089295B1 discloses a securing part of the type indicated above, consisting of a metal clip which is used for securing a bare equipotential cable to a metal mesh cable tray and, at the same time, for establishing an electrical connection between the equipotential cable and the cable tray. The coupling portion has a hook shape for hanging the securing part from one of the longitudinal rods of the mesh cable tray. The securing portion has an inverted hook shape for receiving the cable, comprising elastically deformable tabs for adapting the dimensions of the housing to different cable diameters.

WO2020182738A1 discloses a metal securing part similar to the preceding one. In this case, the securing part hangs from the edge of the upper wall of a U-shaped metal cable tray. The securing portion is elastically flexible for adapting the dimensions of the housing to different cable diameters.

EP2835869B1, US4029384A, and US10253905B2 disclose different metal clip solutions for securing and connecting an equipotential cable to several types of support.

### Description of the Invention

The purpose of the invention is to provide a securing part of the type indicated above, which further facilitates the operations required for securing a cable to a support and allows the cable to be firmly secured for a variety of cable diameters, all this without complicating or increasing the cost of the securing part.

This purpose is achieved by means of a securing part of the type indicated above, characterized in that it comprises two opposite arms extending in cantilever fashion on either side of the housing and of the opening, said two arms being formed such that they demarcate with respect to one another a secondary passage going through the housing in a plurality of successive secondary directions coplanar with the main direction, said secondary directions occurring successively with respect to one another in a continuous manner, forming an increasing angle with the main direction, for the straight segment of the cable, from an initial position in which it is housed in the housing and goes through the securing part along the main passage in the main direction, to go through the securing part along the secondary passage successively in the secondary directions when the securing part rotates about an axis of rotation orthogonal to the plane formed by the main direction and the secondary directions; and such that, in a projection over a plane normal to each secondary direction, the secondary passage has a closed perimeter circumscribing a circumference the diameter of which gradually decreases as said angle gradually increases.

As will be seen below in the detailed description of the embodiments of the invention, this configuration allows a cable to be firmly secured to the securing part with ease using a simple hand gesture, where the cable may have a wide range of diameters, and also allows the cable to be released subsequently with the same ease. To that end, the straight segment of the cable is first placed in the housing through the opening, by means of a translation of said straight segment of the cable in a direction orthogonal to the main direction, and the securing part is then rotated about the axis of rotation. The closed perimeter of the secondary passage gradually decreases as the angle of rotation, i.e., the angle between each secondary direction and the main direction, increases, until a final position in which the diameter of the circumference circumscribed by the closed perimeter of the secondary passage is equal to the diameter of the cable, or slightly less than the diameter of the cable if it is taken into account that the cable may be crushed to a certain extent. The cable is firmly secured to the securing part as a result of the secondary passage pressing on the cable and also as a result of the closed nature of the perimeter of said secondary passage in a projection over a plane normal to the secondary direction. Rotating the securing part in the opposite direction to return to the initial position is sufficient to release the cable.

Preferably, the securing part is a monoblock part and the coupling portion comprises a flat base, a lug extending from said flat base along of the axis of rotation, a head formed at the end of said lug, said head having an oblong shape in a plane orthogonal to the axis of rotation and protruding from the lug in said plane, and elastically deformable projections protruding with respect to the plane of said flat base. This configuration allows the securing part to be coupled to a slotted hole of a plate of the support and has the advantage that it allows this to be done with a single gesture, coupling the securing part to the support and securing the straight segment of the cable to said securing part at the same time by means of simply rotating the securing part. In the initial position, the oblong head of the lug passes through the hole. When the securing part has rotated about the axis of rotation, the oblong head no longer passes through the slotted hole and is retained, while at the same time the elastically deformable projections exert pressure on the plate and stabilize the angular position of the securing part.

In the preferred embodiments, each of the two arms forms a surface demarcating the secondary passage and having a C shape with an open face, a first segment adjacent to a base of the housing opposite the opening, a second segment facing the first segment, and an intermediate segment in the form of an elbow which forms a bottom of the C-shaped surface opposite the open face. The C-shaped surface has in the intermediate segment an inclination such that, in a section through a plane of section parallel to the axis of rotation and to the main direction, the bottom moves away from the open face when the plane of section moves in a direction away from the axis of rotation. This shape of the arms provides a smooth and gradual narrowing of the secondary passage as the securing part is rotated and prevents stresses from being generated as long as the final position has not been reached.

Preferably, the C-shaped surface has a rib extending at least partially in the intermediate segment with an inclination with respect to a plane orthogonal to the axis of rotation. This configuration allows pressing on the cable in an improved manner because pressure is concentrated on the surface of the rib and because said rib forms a perimeter of the secondary passage, in a projection over a plane normal to the secondary directions, with a rhomboid shape.

Preferably, the two arms are rigid and the closed perimeter of the secondary passage, in a projection over a plane normal to each secondary direction, is rigid. A more direct relationship is thereby established between the angle of rotation of the securing part and the force with which the arms press on the cable. Because of its nature, the cable can deform slightly when it is rigidly pressed by the closed perimeter of the secondary passage in the final position, which helps to firmly secure the cable and also to stabilize this final position of the securing part.

Preferably, the two arms are symmetrical with respect to the axis of rotation, so that the stresses caused by the cable in the securing part are balanced out.

Preferably, the securing portion comprises two elastically deformable opposing wings extending respectively from each of the two arms, at the level of the opening, such that said two wings form a local narrowing of the opening. The function of the wings is to retain the straight segment of the cable in the housing in the initial position. This allows the cable to be readily placed in the housings of a plurality of securing parts coupled in the support along a path of the cable, in an initial position of the securing parts before rotating each securing part to press on the cable and secure it.

In preferred embodiments, the securing part is a monoblock part molded from a polymer material. This securing part is used for securing the cable to the support without establishing electrical contact between them.

The invention also relates to an assembly comprising a securing part according to the invention, a support to which the securing part is coupled through the coupling portion, and a suitable cable so that a straight segment of said cable can be introduced into the housing through the opening, said securing part being formed such that, from an initial position in which the straight segment of the cable is housed in the housing and goes through the securing part through the main passage in the main direction, the securing part can be rotated about the axis of rotation, without moving the straight segment of the cable, to a final position in which the straight segment of the cable goes through the securing part through the secondary passage in one of the secondary directions which forms an angle with the main direction, and in which the closed perimeter of the secondary passage presses on the straight segment of the cable, and such that between the initial position and the final position, the securing part remains coupled to the support through the coupling portion.

Preferably, the cable is an electrically conductive cable.

In preferred embodiments, the support is one from among the group consisting of a bar and a cable tray, and the electrically conductive cable is secured by means of said securing part to said bar or to said cable tray. The cable can be, for example, an equipotential cable for grounding the bar and/or the cable tray when they are metal bars and/or trays, or an equipotential cable which is intended for grounding other pieces of electrical equipment and travels along the bar or the cable tray without electrical contact with them.

Preferably, the bar or the cable tray comprises a plurality of slotted holes and the coupling portion of the securing part is configured for being coupled to said bar or to said cable tray through one of the slotted holes such that the securing part can rotate about the axis of rotation. This is a particularly interesting application of the securing part according to the invention which allows a cable to be secured to a bar or a cable tray using the slotted holes usually provided therein with greater ease and without using other parts.

In preferred embodiments, the electrically conductive cable is lacking electrical insulation and the securing part is a monoblock part molded from an electrically insulating polymer material. Preferably, the material has a surface resistivity exceeding 100 MΩ measured according to EN 62631-3-2:2016 standard. In this case, the securing part serves to lead the cable along the support and prevents electrical contact between them. In other possible embodiments, the securing part is made of an electrically conductive material, in particular a metal, and has the function of putting the non-insulated electrically conductive cable in contact with the support, which can be a metal support.

The invention also comprises other detail features shown in the following detailed description of an embodiment of the invention and in the attached figures.

### Brief Description of the Drawings

The advantages and features of the invention will become apparent from the following description in which a preferred embodiment of the invention is described in a non-limiting manner with respect to the scope of the main claim in reference to the figures.
Figures 1 and 2 are perspective views from two different angles of an assembly formed by a ladder-type cable tray, a bare electrically conductive cable, and several securing parts securing the cable along the cable tray.
Figure 3 is an enlarged perspective view showing one of the two bars constituting the longitudinal rails of the cable tray, to which the securing parts are coupled.
Figures 4 and 5 are enlarged perspective views of an end of the assembly from two different angles.
Figures 6 and 7 are, respectively, a front view and a side view showing an area of the assembly with a securing part in the final position pressing on the straight segment of the cable.
Figures 8, 9, 10, and 11 are perspective views of the securing part from different angles.
Figures 12, 13, 14, 15, 16, and 17 are, respectively, a front view, a right side view, a rear view, a left side view, a top view, and a bottom view of the securing part.
Figures 18 and 19 are sectioned perspective views of the securing part. In Figure 18, the part is sectioned along a first plane. In Figure 19, the part is sectioned along a second plane parallel to the first plane and closer to the axis of rotation.
Figures 20, 21, 22, 23, 24, and 25 each shows a front view and a right side view of the securing part. In these views, the securing part is in the following angular positions respectively with respect to an angle of rotation about the axis of rotation: 0°, 45°, 90°, 105°, 120°, and 135°.
Figures 26, 27, 28, 29, 30, and 31 each shows a front view, a rear view, and a right side view of the securing part coupled to the bar of the cable tray. In these views, the securing part is in the following angular positions respectively with respect to an angle of rotation about the axis of rotation: 0°, 45°, 90°, 105°, 120°, and 135°.

### Detailed Description of an Embodiment of the Invention

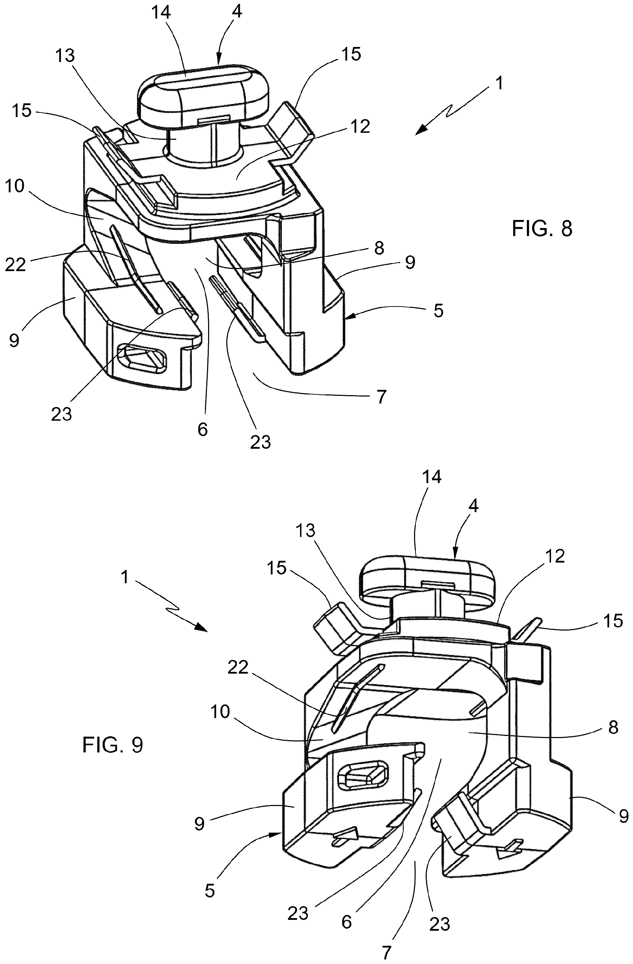

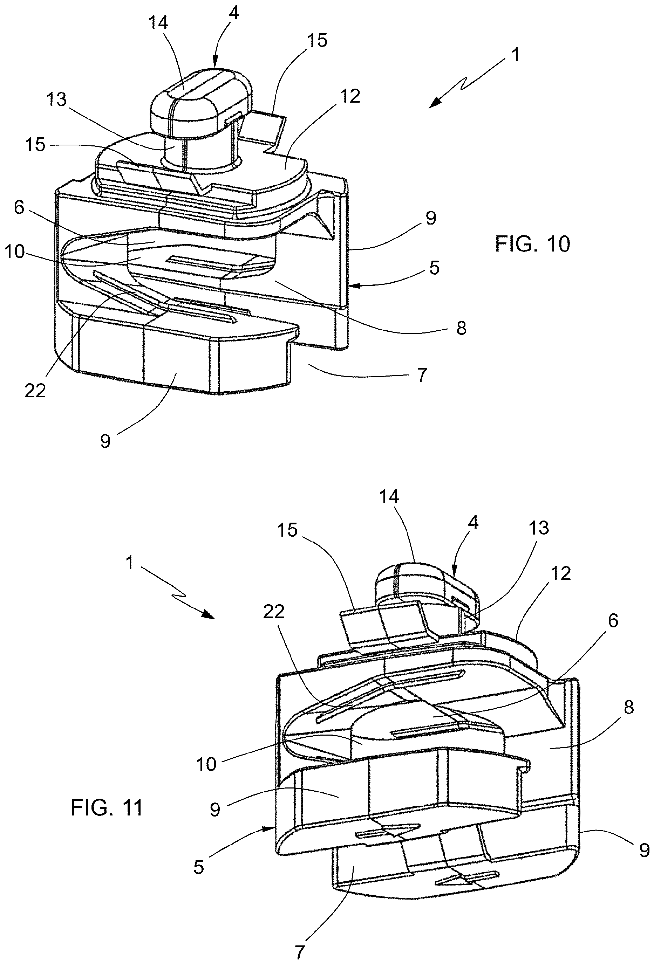

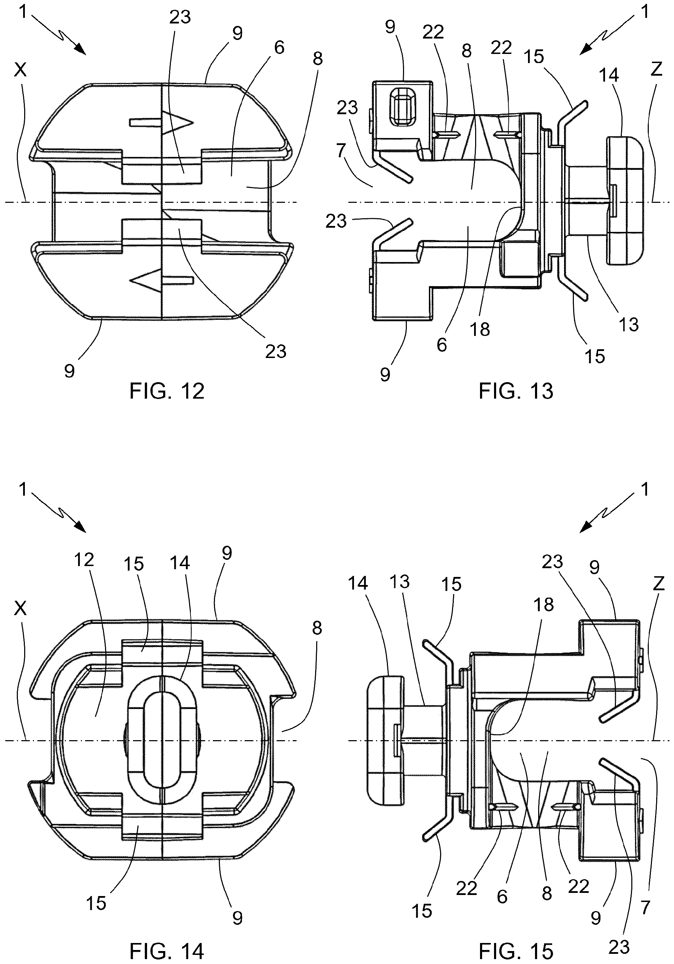

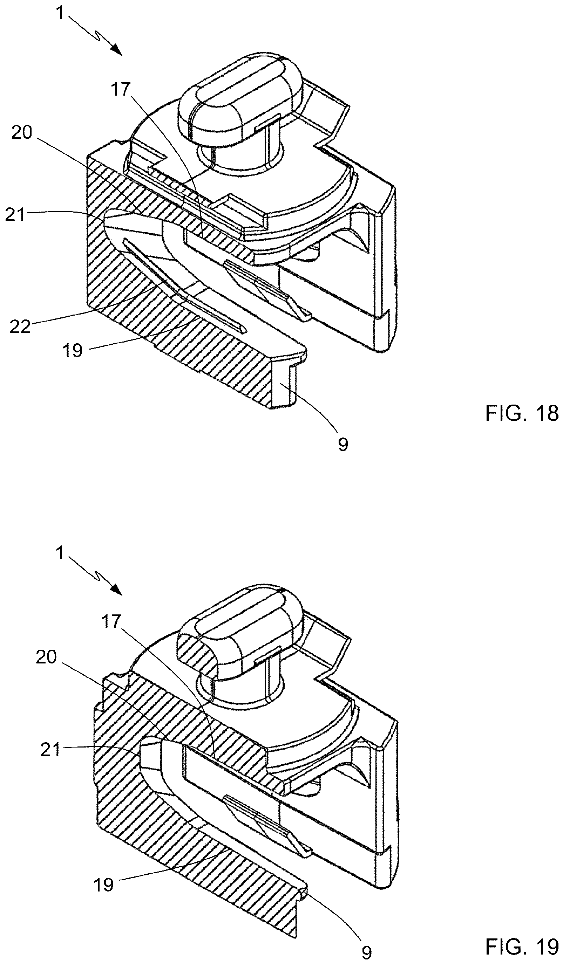

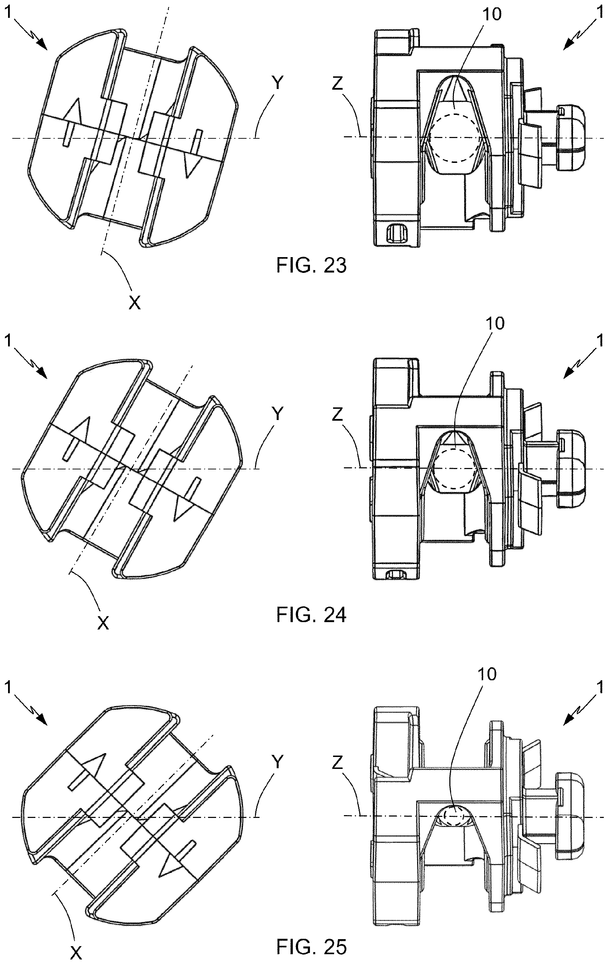

Figures 8 to 25 show an example of an embodiment of a securing part according to the invention. In this example, the securing part 1 is a monoblock part molded from an electrically insulating polymer material such as, for example, a thermoplastic such as PVC, polyamide, or polypropylene. Preferably, the electrically insulating polymer material which forms the securing part 1 has a surface resistivity exceeding 100 MΩ measured according to EN 62631-3-2:2016 standard.

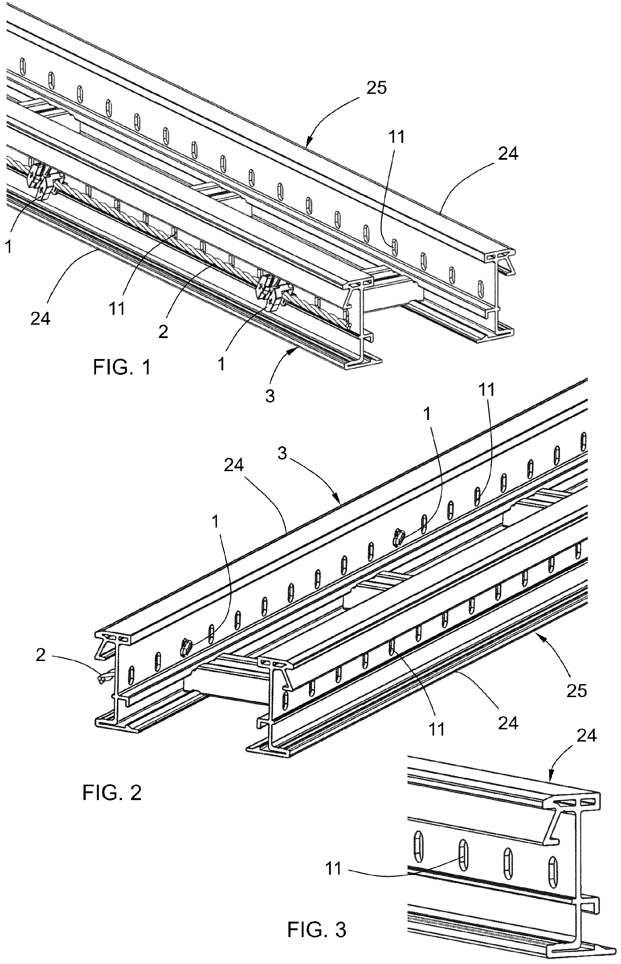

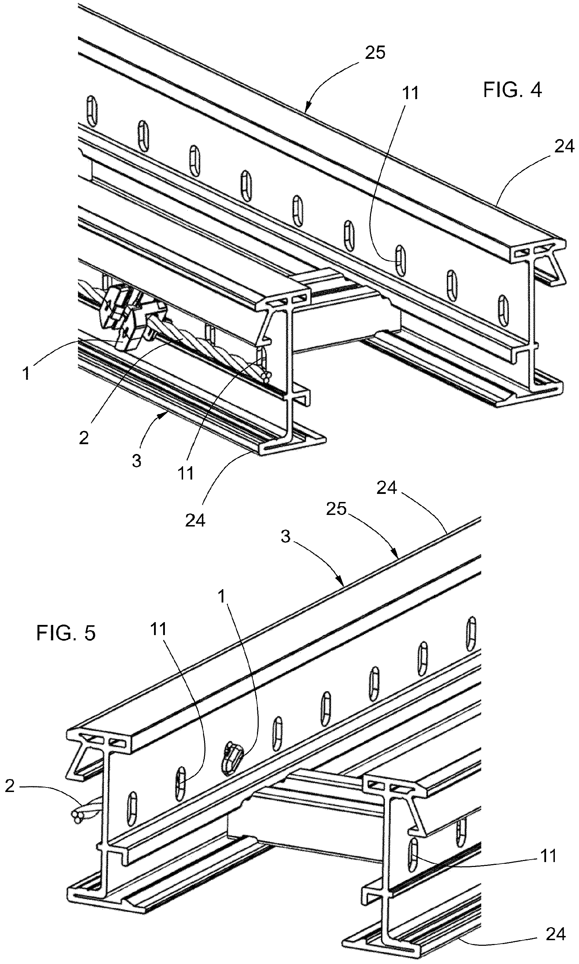

The securing part 1 is used for securing a cable 2 to a support 3. In the example depicted in Figures 1 to 7, the cable 2 is a conductive metal cable. The cable 2 is bare, i.e., without electrical insulation. The support 3 to which the cable 2 is secured through the securing part 1 is a bar 24. The bar 24 is one of the two longitudinal rails of a ladder-type cable tray 25, which is formed by the two parallel bars 24 by way of rails and a plurality of transverse bars by way of rungs which form a discontinuous bottom wall of the cable tray 25. Therefore, in the depicted example, the support 3 to which the cable 2 is secured through the securing part 1 is a cable tray 25 and also a bar 24 which is part of said tray. The bars 24 forming the two rails of a ladder-type cable tray 25 are known to have a central wall with a plurality of identical slotted through holes 11 evenly distributed along said bar 24. As will be described below, the securing part 1 is coupled to the bar 24, and therefore also to the cable tray 25, through any of the slotted holes 11, such that said securing part 1 can rotate about an axis of rotation Z when it is coupled to the bar 24. As shown in Figures 1 and 2, to secure the cable 2 along the bar 24, a plurality of identical securing parts 1 are used, each of them being coupled to said bar 24 through a slotted hole 11. Each of these securing parts 1 secures a straight segment of the cable 2 to the bar 24. In the depicted example, the cable tray 25, including the bars 24, is made of an electrically insulating polymer material, for example, PVC. The cable 2 is an equipotential cable which is led along the bar 24 and the cable tray 25 to units of electrical equipment (not shown in the figures) to which the cable 2 is connected in order to set said units of electrical equipment at the same potential. In particular, the cable 2 can be a grounding cable. In other possible applications, the securing part 1 can be similarly coupled to the slotted holes of a support bar, or to the slotted holes of the side walls or of the bottom wall of a continuous cable tray. Cable trays, either of a ladder-type such as in the example depicted in the figures or of a continuous type, are used to lead electrical cables, fiber-optic cables, or cables of another type through a space.

The securing part 1 comprises a coupling portion 4 for coupling said securing part 1 to the bar 24 through a slotted hole 11, and a securing portion 5 for securing a straight segment of the cable 2 to said securing part 1.

As can be seen in Figures 8 to 17, the coupling portion 4 comprises a flat base 12, a lug 13 extending from the flat base 12 along an axis of rotation Z of the securing part 1, and a head 14 formed at the end of the lug 13. The head 14 has an oblong shape in a plane orthogonal to the axis of rotation Z and protrudes from the lug 13 in said plane. The oblong shape of the head 14 corresponds to the shape of the slotted holes 11 but is slightly smaller, such that said head 14 can pass through the slotted hole 11 when it is aligned with same. Elastically deformable projections 15 protrude with respect to the plane of the flat base 12. To couple the securing part 1 to the bar 24, the head 14 is positioned facing a slotted hole 11 with the same orientation, the securing part 1 is moved in the direction of the axis of rotation Z to pass the head 14 through the slotted hole 11, overcoming the elastic force of the projections 15 that are supported against the flat wall of the bar 24, and the securing part 1 is rotated about the axis of rotation Z. After the rotation is performed, the head 14 retains the securing part 1 against the bar 24 and the elastic force of the projections 15 that are supported against the flat wall of the bar 24 maintains the angular position of the support part 1 with respect to the axis of rotation Z. This way of coupling a part to a wall through a slotted hole is known. However, as will be seen below, in the securing part 1 according to the invention, the same rotation is advantageously used for coupling the securing part 1 to the bar 24 and for securing a straight segment of the cable 2.

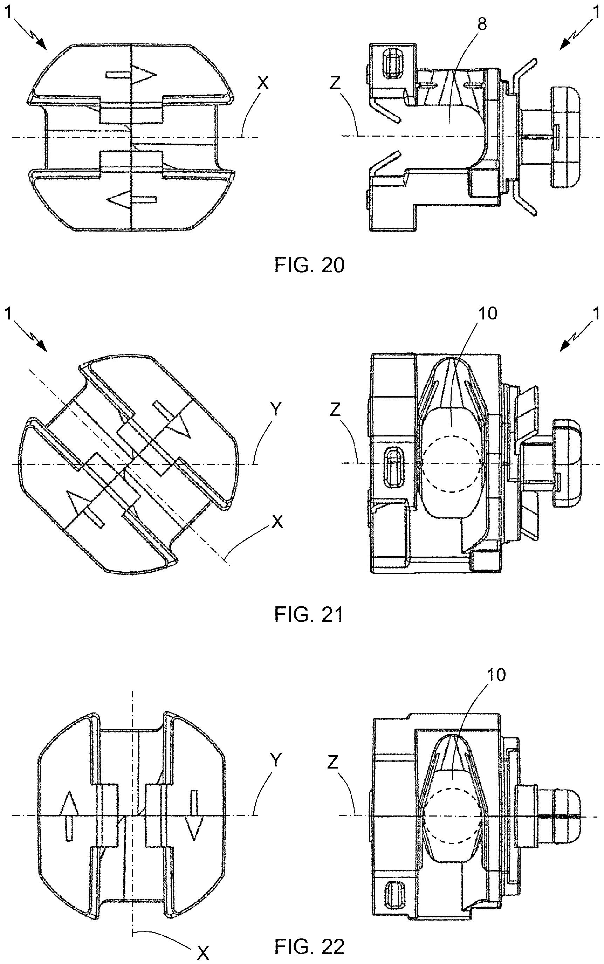

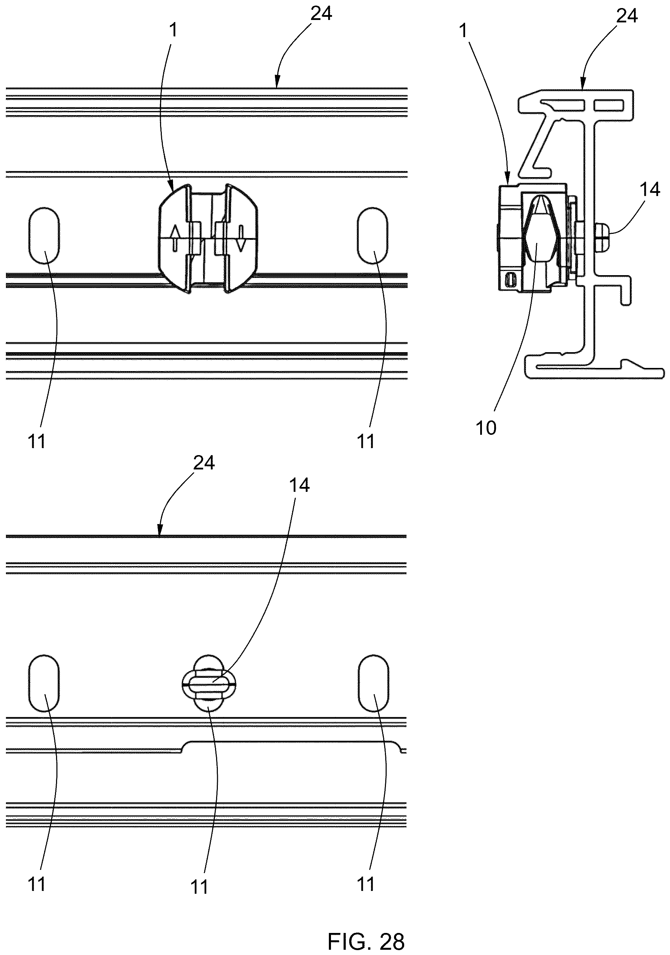

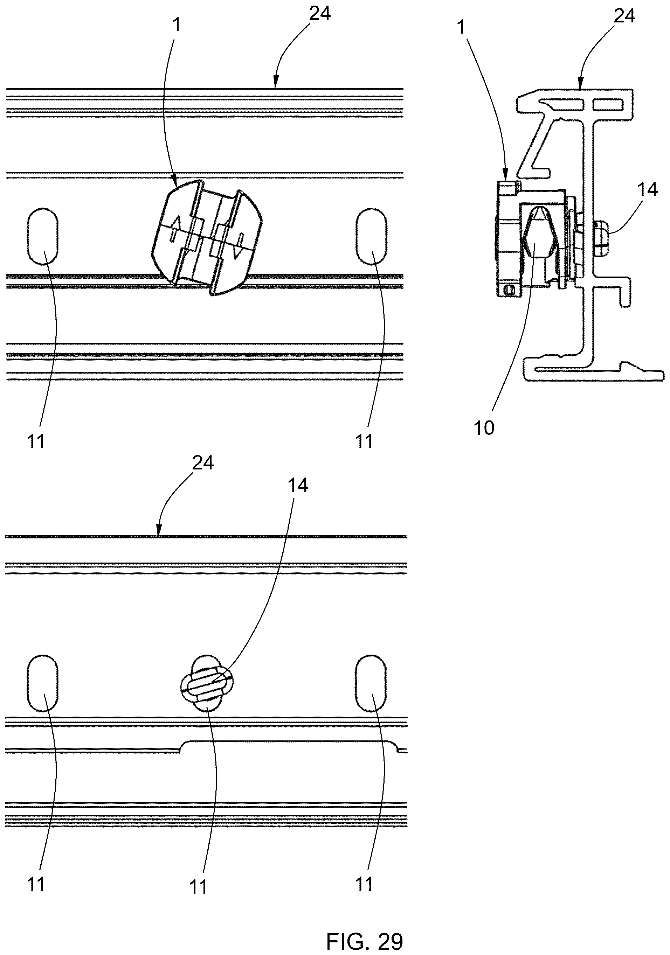

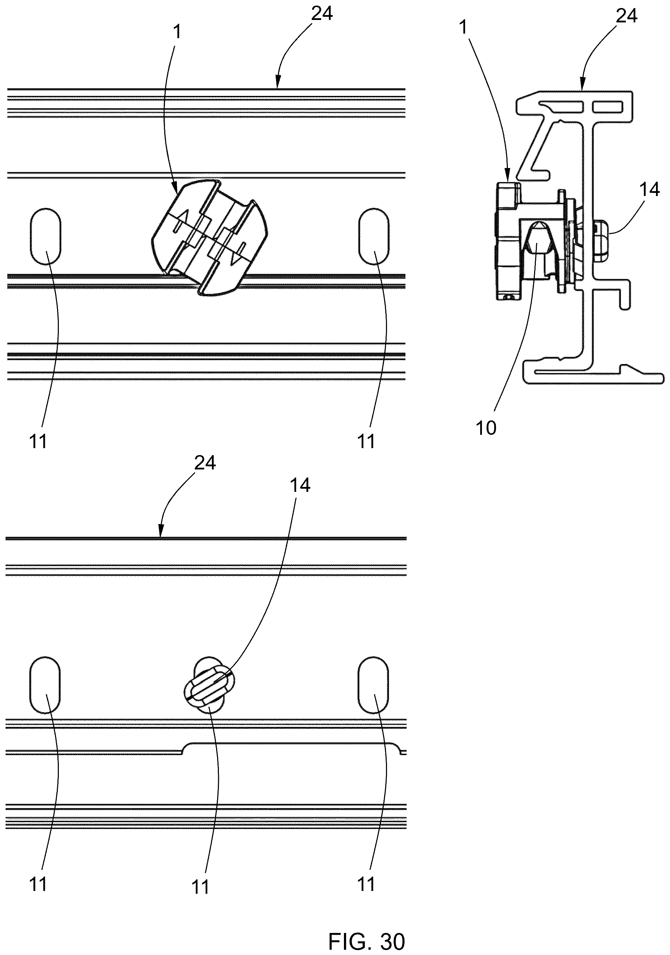

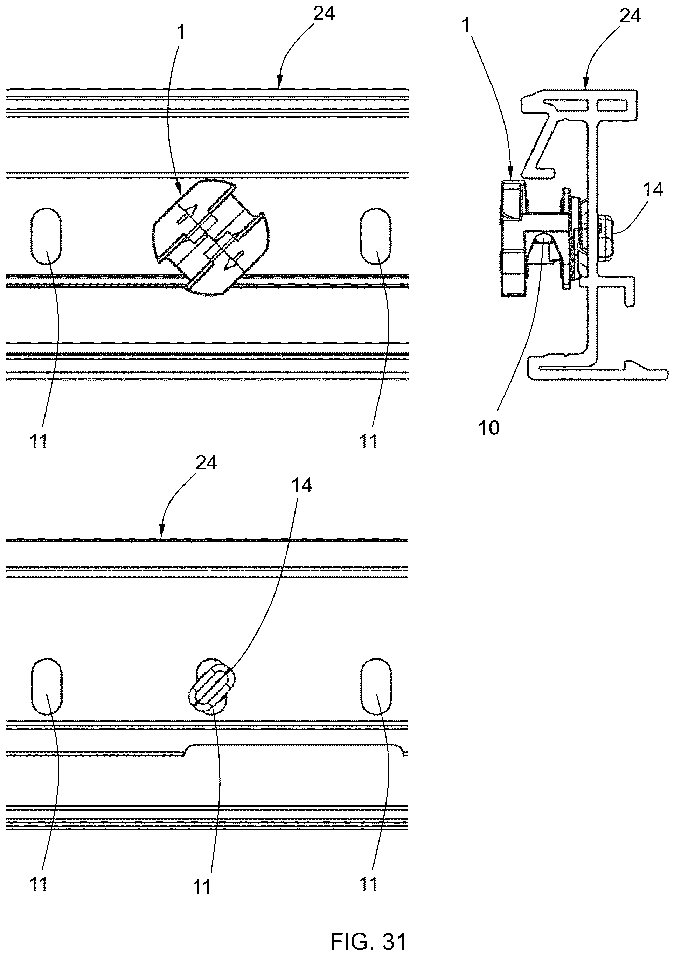

The securing portion 5 comprises a housing 6 for housing a straight segment of the cable 2. The housing 6 defines a main passage 8 in a main direction X so that the straight segment of the cable 2, housed in said housing 6, goes through the securing part 1 through said main passage 8. An opening 7 allows the straight segment of the cable 2 to be introduced, from the outside of the securing part 1, into the housing 6 and into the main passage 8 by means of a translation of said straight segment of the cable 2 in a direction orthogonal to the main direction X. As will be seen below in the description of Figures 20 to 31, from this initial position in which the straight segment of the cable 2 has been introduced through the opening 7 into the housing 6 and into the main passage 8 and goes through the securing part 1 through said main passage 8 in the main direction X, the securing part 1 can be rotated about the axis of rotation Z, without moving the straight segment of the cable 2, to a final position in which said straight segment of the cable 2 goes through the securing part 1 through a secondary passage 10 in a secondary direction Y forming an angle with the main direction X. In this final position, a closed perimeter of the secondary passage 10 presses on the straight segment of the cable 2. Between the initial position and the final position, the securing part 1, which has been coupled to the bar 24 by means of the introduction of the head 14 through the slotted hole 11 as described above, remains coupled to the bar 24 through the coupling portion 5. By means of the rotation of the securing part 1 about the axis of rotation Z, the transition from the first position to the second position, for pressing on the cable 2 in the secondary passage 10, and the rotation of the head 14 for retaining the securing part 1 against the bar 24 are performed at the same time.

To that end, the securing portion 5 comprises two opposite arms 9 extending in cantilever fashion on either side of the housing 6 and of the opening 7. These two arms 9 are preferably rigid and symmetrical with respect to the axis of rotation, and demarcate with respect to one another the secondary passage 10, such that said secondary passage 10 goes through the housing 6 in a plurality of successive secondary directions Y coplanar with the main direction X. These secondary directions Y occur successively with respect to one another in a continuous manner, forming an increasing angle with the main direction X. In the initial position, the straight segment of the cable 2 is housed in the housing 6 and goes through the securing part 1 through the main passage 8 in the main direction X. As shown in Figures 20 to 25, when the securing part 1 is rotated about the axis of rotation Z, the straight segment of the cable 2 (not shown in these figures) can go through the securing part 1 through the secondary passage 10 successively in the secondary directions Y forming an angle with the main direction X. The plane formed by the main direction X and the secondary directions Y is orthogonal to the axis of rotation Z. In a projection over a plane normal to each secondary direction Y, the secondary passage 10 has a rigid closed perimeter circumscribing a circumference the diameter of which gradually decreases as the angle gradually increases. This circumference is indicated with a discontinuous line in Figures 20 to 25. When the diameter of the circumference is equal to the diameter of the cable 2, or slightly less if the deformation of the cable 2 is taken into account, the closed perimeter of the secondary passage 10 presses on the straight segment of the cable 2 and the final position in which said straight segment of the cable 2 is firmly secured to the securing part 1 is achieved.

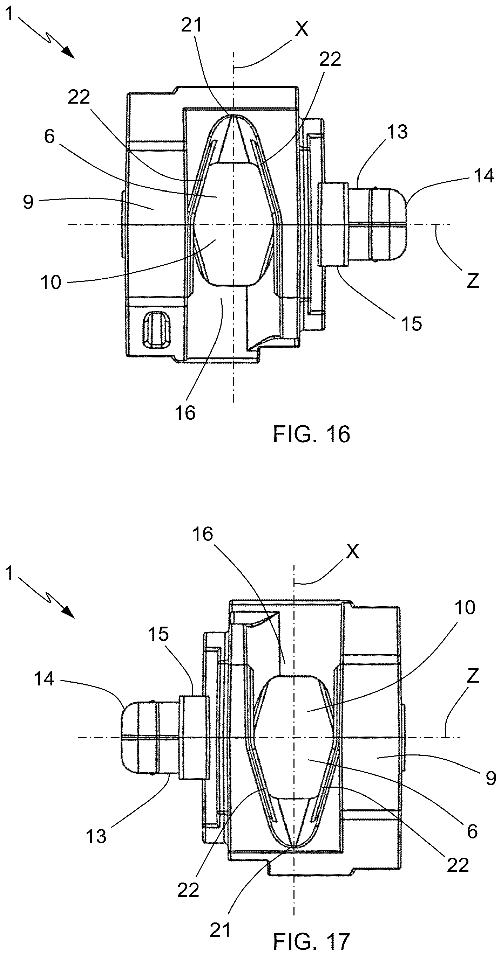

As can be seen in Figures 16 to 19, in the preferred embodiment shown in the figures each of the two arms 9 forms a surface demarcating the secondary passage 10 and having a C shape, with an open face 16, a first segment 17 adjacent to a base 18 of the housing 6 opposite the opening 7, a second segment 19 facing the first segment 17, and an intermediate segment 20 in the form of an elbow which forms a bottom 21 of said C-shaped surface opposite the open face 16. The C-shaped surface has in the intermediate segment 20 an inclination such that, in a section through a plane of section parallel to the axis of rotation Z and to the main direction X, the bottom 21 moves away from the open face 16 when the plane of section is moved in a direction away from the axis of rotation Z. Furthermore, preferably, in each of the two arms 9, the C-shaped surface has a rib 22 extending at least partially in the intermediate segment 20 with an inclination with respect to a plane orthogonal to the axis of rotation Z. In the embodiment shown in the figures, the rib 22 extends partially in each of the upper segment 17 and lower segment 19 and partially in the intermediate segment 20, leaving the bottom 21 free, and is arranged in a plane parallel to the axis of rotation Z and to the main direction X. The securing portion 5 preferably comprises two elastically deformable opposing wings 23 extending respectively from each of the two arms 9, at the level of the opening 7, such that they form a local narrowing of said opening 7. In the example depicted in the figures, each of the wings 23 extends towards the other wing 23 and the bottom 18 of the housing 6. In the initial position, these wings 23 retain the straight segment of the cable 2 in the housing 6 and in the main passage 8.

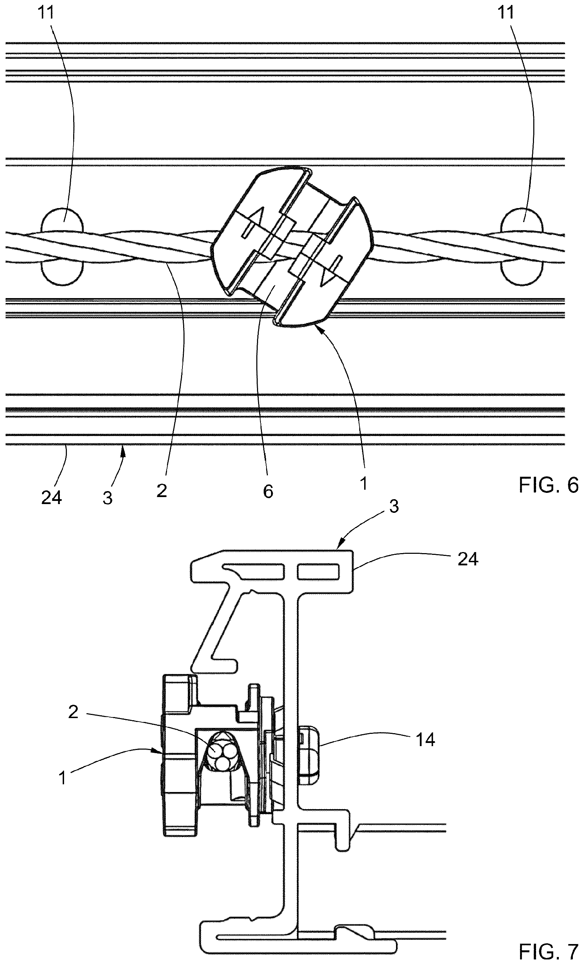

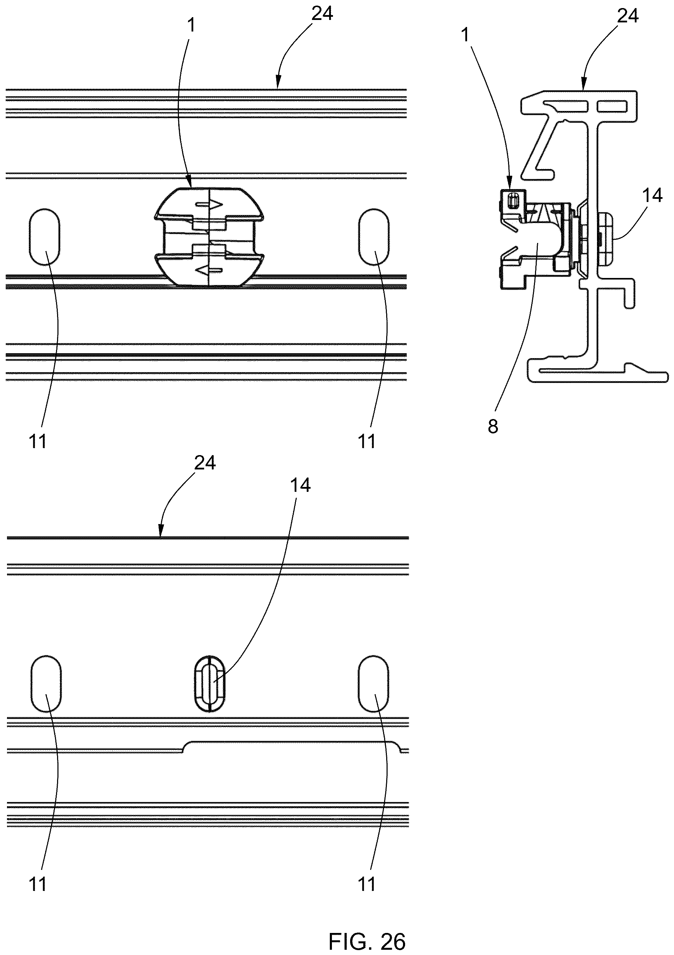

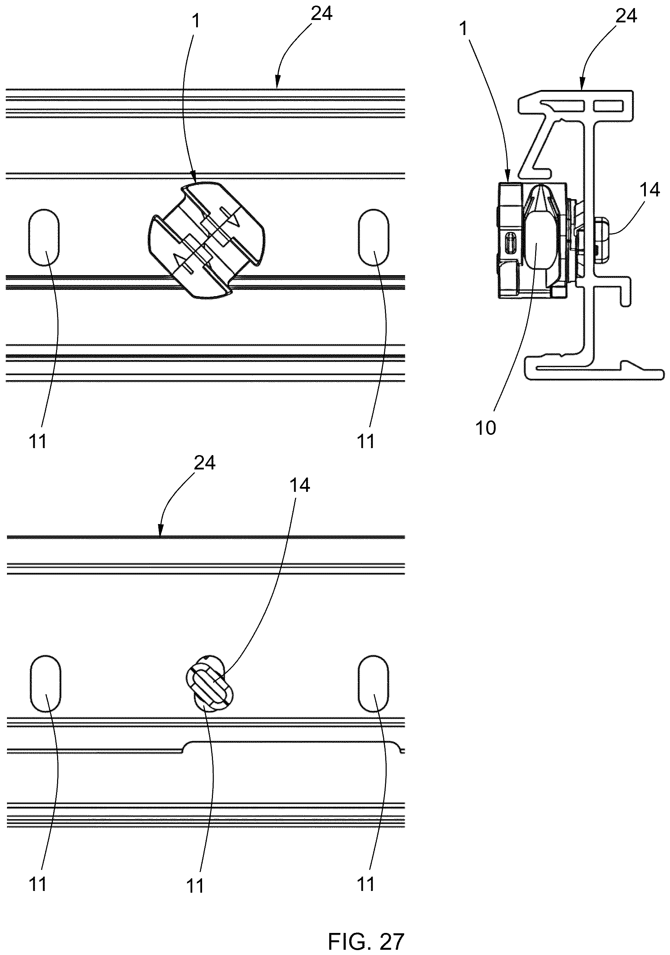

Next, the method for securing the cable 2 to the bar 24 by means of the securing part 1 will be described. In an initial position shown in Figures 20 and 26, the securing part 1 has been positioned with the head 14 aligned with the slotted hole 11 and has been moved towards the bar 24 such that the head 14 has passed through the slotted hole 11 and the projections 15 are supported against the flat wall of the bar 24, exerting an elastic force against same. The straight segment of the cable 2 (not shown in these figures), extending in the longitudinal direction of the bar 24, has been introduced into the housing 6 through the opening 7 and goes through the securing part 1 through the main passage 8 in the main direction X. The straight segment of the cable 2 is retained in the housing 6 by the wings 23. In Figures 20 and 26, the main direction X is parallel to the longitudinal direction of the bar 24. The securing part 1 is then rotated to the right about the axis of rotation Z. The main direction X rotates integrally with the securing part 1, whereas the secondary direction Y is kept parallel to the longitudinal direction of the bar 24. Figures 21 to 25 show the securing part 1 only in positions in which the angle between the secondary direction Y and the main direction X is successively 45°, 90°, 105°, 120°, and 135°. Figures 27 to 31 show these same positions with the securing part coupled to the bar 24 through the slotted hole 11. During the rotation of the securing part 1 from the initial position, the straight segment of the cable 2 is kept parallel to the longitudinal direction of the bar 24 and goes through the securing part 1 through the secondary passage 10 in the secondary direction Y. As the angle of rotation, i.e., the angle between the main direction X rotating integrally with the securing part 1 and the secondary direction Y kept parallel to the longitudinal direction of the bar 24, gradually increases, the straight segment of the cable 2 is kept parallel to the longitudinal direction of the bar 24 and continues to go through the securing part 1 through the secondary passage 10 in the secondary direction Y. The diameter of the circumference circumscribed by the closed perimeter of the secondary passage 10 gradually decrease until a final position in which said diameter is equal to or slightly less than the diameter of the cable 2. In this final position, the closed perimeter of the secondary passage 10 presses on the straight segment of the cable 2, whereby this cable is firmly secured by the securing part 2. Figures 6 and 7 show a final position for a cable 2 having a given diameter. Outside the initial position, in each of the positions during the rotation and until the final position, the head 14 and the projections 15 keep the securing part 1 coupled to the bar 24 in said position. To continue with the rotation from the initial position, the user must exert on the securing part a torque which is sufficient to overcome the friction forces of the head 14 and the projections 15 against the surface of the bar 24. To that end, the user can readily grab the securing part 1 by the arms 9 with his/her fingers. The operation to release the straight segment of the cable 2 consists of simply rotating the securing part 1 in the opposite direction from the final position to the initial position, in which the securing part 1 can be decoupled from the bar 24 (the head 14 is aligned with the slotted hole 11 and can go through same again) and the straight segment of the cable 2 can be removed from the housing 6 through the opening 7, it being necessary to bend the wings 23 for that purpose.

## Claims

1. A securing part (1) for securing a cable (2) to a support (3), said securing part (1) comprising a coupling portion (4) for coupling said securing part (1) to said support (3), and a securing portion (5) for securing said cable (2) to said securing part (1), said securing portion (5) comprising a housing (6) for housing a straight segment of said cable (2), said housing (6) defining a main passage (8) in a main direction (X) for said straight segment of the cable (2) housed in said housing (6) to go through said securing part (1) through said main passage (8), and an opening (7) for introducing said straight segment of the cable (2), from the outside of said securing part (1), into said housing (6) and into said main passage (8) by means of a translation of said straight segment of the cable (2) in a direction orthogonal to said main direction (X); **characterized in that** said securing portion (5) comprises two opposite arms (9) extending in cantilever fashion on either side of said housing (6) and of said opening (7), said two arms (9) being formed such that they demarcate with respect to one another a secondary passage (10) going through said housing (6) in a plurality of successive secondary directions (Y) coplanar with said main direction (X), said secondary directions (Y) occurring successively with respect to one another in a continuous manner, forming an increasing angle with said main direction (X), for said straight segment of the cable (2), from an initial position in which it is housed in said housing (6) and goes through said securing part (1) through said main passage (8) in said main direction (X), to go through said securing part (1) through said secondary passage (10) successively in said secondary directions (Y) when said securing part (1) rotates about an axis of rotation (Z) orthogonal to the plane formed by said main direction (X) and said secondary directions (Y); and such that, in a projection over a plane normal to each secondary direction (Y), said secondary passage (10) has a closed perimeter circumscribing a circumference the diameter of which gradually decreases as said angle gradually increases.

2. The securing part (1) according to claim 1, **characterized in that** it is a monoblock part and said coupling portion (4) comprises a flat base (12), a lug (13) extending from said flat base (12) along said axis of rotation (Z), a head (14) formed at the end of said lug (13), said head (14) having an oblong shape in a plane orthogonal to said axis of rotation (Z) and protruding from said lug (13) in said plane, and elastically deformable projections (15) protruding with respect to the plane of said flat base (12).

3. The securing part (1) according to any one of claims 1 or 2, **characterized in that** each of said two arms (9) forms a surface demarcating said secondary passage (10) and having a C shape, with an open face (16), a first segment (17) adjacent to a base (18) of said housing (6) opposite said opening (7), a second segment (19) facing said first segment (17), and an intermediate segment (20) in the form of an elbow which forms a bottom (21) of said C-shaped surface opposite said open face (16), and **in that** said C-shaped surface has in said intermediate segment (20) an inclination such that, in a section through a plane of section parallel to said axis of rotation (Z) and to said main direction (X), said bottom (21) moves away from said open face (16) when said plane of section is moved in a direction away from said axis of rotation (Z).

4. The securing part (1) according to claim 3, **characterized in that** said C-shaped surface has a rib (22) extending at least partially in said intermediate segment (20) with an inclination with respect to a plane orthogonal to said axis of rotation (Z).

5. The securing part (1) according to any one of claims 1 to 4, **characterized in that** said two arms (9) are rigid; and said closed perimeter of the secondary passage (10), in a projection over a plane normal to each secondary direction (Y), is rigid.

6. The securing part (1) according to any one of claims 1 to 5, **characterized in that** said two arms (9) are symmetrical with respect to said axis of rotation (Z).

7. The securing part (1) according to any one of claims 1 to 6, **characterized in that** said securing portion (5) comprises two elastically deformable opposing wings (23) extending respectively from each of said two arms (9), at the level of said opening (7), such that said two wings (23) form a local narrowing of said opening (7).

8. The securing part (1) according to any one of claims 1 to 7, **characterized in that** it is a monoblock part molded from a polymer material.

9. An assembly comprising a securing part (1) according to any one of claims 1 to 8, a support (3) to which said securing part (4) is coupled through said coupling portion (5), and a suitable cable (2) so that a straight segment of said cable (2) can be introduced into said housing (6) through said opening (7), said securing part (1) being formed such that, from an initial position in which said straight segment of the cable (2) is housed in said housing (6) and goes through said securing part (1) through said main passage (8) in said main direction (X), said securing part (1) can be rotated about said axis of rotation (Z), without moving said straight segment of the cable (2), to a final position in which said straight segment of the cable (2) goes through said securing part (1) through said secondary passage (10) in one of said secondary directions (Y) which forms an angle with said main direction (X), and in which said closed perimeter of the secondary passage (10) presses on said straight segment of the cable (2), and such that between said initial position and said final position, said securing part (1) remains coupled to said support (3) through said coupling portion (5).

10. The assembly according to claim 9, **characterized in that** said cable (2) is an electrically conductive cable.

11. The assembly according to claim 10, **characterized in that** said support (3) is one from among the group consisting of a bar (24) and a cable tray (25), and wherein said electrically conductive cable (2) is secured by means of said securing part (1) to said bar (24) or to said cable tray (25).

12. The assembly according to claim 11, **characterized in that** said bar (24) or said cable tray (25) comprises a plurality of slotted holes (11) and said coupling portion (4) of the securing part (1) is configured for being coupled to said bar (24) or to said cable tray (25) through one of said slotted holes (11) such that said securing part (1) can rotate about said axis of rotation (Z).

13. The assembly according to any one of claims 10 to 12, **characterized in that** said electrically conductive cable (2) is lacking electrical insulation and said securing part is a monoblock part molded from an electrically insulating polymer material.
